# EUROPÄISCHE PATENTANMELDUNG

(11) **EP 3 219 422 A1**
(43) Veröffentlichungstag der Anmeldung: **20.09.2017**
(21) Anmeldenummer: 16160122.4
(22) Anmeldetag: 14.03.2016
(51) Int. Cl.: B23B 35/00, B23B 45/02

(54) **VERFAHREN ZUM BETREIBEN EINER WERKZEUGMASCHINE UND WERKZEUGMASCHINE BETREIBBAR MIT DEM VEFAHREN**

(71) Anmelder: Hilti Aktiengesellschaft, 9494 Schaan (LI)
(72) Erfinder: Sattler, Christian, 87640 Biessenhofen (DE); Drexl, Tobias, 86947 Weil (DE)
(74) Vertreter: Hilti Aktiengesellschaft Corporate Intellectual Property

(57) **Zusammenfassung**

Die Anmeldung betrifft ein Verfahren zum Betreiben einer Werkzeugmaschine, insbesondere einer Kernbohrmaschine, mit einem Elektromotor zum Antreiben eines Bohrwerkzeugs, insbesondere einer Bohrkrone, und mit einer Steuer- und Regelvorrichtung zum Regeln und Steuern der Motorleistung mittels Motorstroms des Elektromotors,

gekennzeichnet durch die Verfahrensschritte

- Betreiben der Werkzeugmaschine in einem Anbohrmodus mit einem ersten Drehzahlwert, wobei der erste Drehzahlwert geringer ist als ein vorbestimmter Leerlaufdrehzahlwert des Elektromotors;
- Ermitteln eines vorbestimmten ersten Schwellwerts für den Motorstrom;
- Reduzieren des Motorstroms auf einen vorbestimmten zweiten Schwellwert wenn der erste Schwellwert für den Motorstrom überschritten wird;
- Betreiben der Werkzeugmaschine mit einem zweiten Drehzahlwert, wobei der zweite Drehzahlwert geringer ist als der erste Drehzahlwert;
- Betreiben des Elektromotors mit einem vorbestimmten Motorstromwert; und
- Betreiben der Steuer- und Regelvorrichtung zum Regeln der Motorleistung mittels Motorstroms in einem oszillierenden Verhalten,

sowie eine Werkzeugmaschine betreibbar mit dem Verfahren.

## Beschreibung

Die vorliegende Erfindung betrifft ein Verfahren zum Betreiben einer Werkzeugmaschine, insbesondere einer Kernbohrmaschine, mit einem Elektromotor zum Antreiben eines Bohrwerkzeugs, insbesondere einer Bohrkrone, und mit einer Steuer- und Regelvorrichtung zum Regeln und Steuern des Motorstroms des Elektromotors. Darüber hinaus betrifft die vorliegende Erfindung eine Werkzeugmaschine betreibbar mit dem vorliegenden Verfahren.

Schneidewerkzeuge wie Bohrkronen werden von Kernbohrmaschinen in Rotation versetzt, um Löcher in harte Werkstoffe zu schneiden. Bei den Werkstoffen kann es sich beispielsweise um Beton, Zement, Ziegelwerk oder dergleichen handeln. Um ordnungsgemäß ein Loch in den harten Werkstoff zu schneiden, wird die Bohrkrone mit der Kernbohrmaschine verbunden und mit Hilfe des Elektromotors der Kernbohrmaschine in eine Drehbewegung gebracht. Üblicherweise wird die Kernbohrmaschine mit Hilfe eines sogenannten Bohrständers mit dem jeweiligen Werkstoff verbunden, in den das Loch geschnitten werden soll. Der Bohrständer ist dabei mit dem Werkstoff verbunden (d.h. beispielsweise verschraubt, verspannt oder mittels einer Vakuumvorrichtung an dem Fuß des Bohrständers). Praktischerweise wird zwischen der Kernbohrmaschine und dem Bohrständer eine Vortriebseinrichtung positioniert. Die Vortriebseinrichtung dient dazu, die Kernbohrmaschine zusammen mit der Bohrkrone den Bohrständer entlang zu bewegen. Hierbei kann die Vortriebseinrichtung entweder manuell, d.h. mit Hilfe eines Handrades von dem Anwender bedient, oder automatisch, d.h. durch einen eigenen Antriebsmotor. In der automatischen Variante der Vortriebseinrichtung erfolgt der Bewegungsablauf bzw. der Vorschub entlang dem Bohrständer entsprechend einem hinterlegten Programm.

Um bei dem Beginn des Kernbohrvorgangs ein genaues Positionieren zu ermöglichen bzw. ein Verrutschen der Bohrkrone auf dem zu bearbeitenden Werkstoff zu verhindern, beginnt der Kernbohrvorgang für gewöhnlich mit einem sogenannten Anbohrmodus. Hierbei wird die Bohrkrone mit einer relativ geringen Drehgeschwindigkeit betrieben. Gleichzeitig fährt die Vortriebseinrichtung die Kernbohrmaschine zusammen mit der sich langsam drehenden Bohrkrone ebenfalls relativ langsam in Richtung des Werkstoffs.

Nachdem die Bohrkrone Kontakt mit der Oberfläche des Werkstoffs (z.B. Beton) hat, wird diese mit einer relativ geringen Anpresskraft auf den Werkstoff gedrückt. Da es sich üblicherweise um einen relativ harten Werkstoff handelt, kann bei einer zu hohen Anpresskraft auf die Bohrkrone deren Drehzahl stark abfallen bzw. die Bohrkrone komplett zum Stillstand kommen.

Durch die geringe Drehzahl ist auch die Bohr- bzw. Schneideleistung der Bohrkrone reduziert, wodurch nur ein geringer Bohrvortrieb in einen harten Werkstoff möglich wird.

Aufgabe der vorliegenden Erfindung ist es daher ein Verfahren zum Betreiben einer Werkzeugmaschine, insbesondere einer Kernbohrmaschine, bereitzustellen, mit dem das vorstehend beschriebene Problem gelöst und insbesondere eine ausreichend hohe Bohr- bzw. Schneideleistung der Bohrkrone bei einer relativ niedrigen Drehzahl erreicht werden kann.

Die Aufgabe wird gelöst durch den Gegenstand des unabhängigen Anspruch 1 sowie entsprechend durch den Gegenstand des unabhängigen Anspruchs 4. Vorteilhafte Ausführungen sind in den Unteransprüchen enthalten.

Die Aufgabe wird somit gelöst durch ein Verfahren zum Betreiben einer Werkzeugmaschine, insbesondere einer Kernbohrmaschine, mit einem Elektromotor zum Antreiben eines Bohrwerkzeugs, insbesondere einer Bohrkrone, und mit einer Steuer- und Regelvorrichtung zum Regeln und Steuern der Motorleistung mittels Motorstroms des Elektromotors.
Erfindungsgemäß enthält das Verfahren die Verfahrensschritte:
- Betreiben der Werkzeugmaschine in einem Anbohrmodus mit einem ersten Drehzahlwert, wobei der erste Drehzahlwert geringer ist als ein vorbestimmter Leerlaufdrehzahlwert des Elektromotors;
- Ermitteln eines vorbestimmten ersten Schwellwerts für den Motorstrom;
- Reduzieren des Motorstroms auf einen vorbestimmten zweiten Schwellwert, wenn der erste Schwellwert für den Motorstrom überschritten wird;
- Betreiben der Werkzeugmaschine mit einem zweiten Drehzahlwert, wobei der zweite Drehzahlwert geringer ist als der erste Drehzahlwert;
- Betreiben des Elektromotors mit einem vorbestimmten Motorstromwert, und
- Betreiben der Steuer- und Regelvorrichtung zum Regeln der Motorleistung mittels Motorstroms in einem oszillierenden Verhalten.

Durch das oszillierende Verhalten der Steuer- und Regelvorrichtung wird impulsartig Strom an den Elektromotor geleitet, kann mit einer relativ kleinen Drehzahl eine ausreichend hohe Bohr- bzw. Schneideleistung der Bohrkrone erreicht werden. Mit Hilfe der erhöhten Leistung bei geringer Drehzahl wird ein kontrollierter und gleichzeitig schneller Vortrieb in dem zu bearbeitenden Werkstoff erreicht.

Gemäß einer vorteilhaften Ausführungsform der vorliegenden Erfindung kann es möglich sein, dass der vorbestimmte Schwellwert der Kipp-Punkt für den Motorstrom ist.

Entsprechend einer weiteren vorteilhaften Ausführungsform der vorliegenden Erfindung kann es möglich sein, dass der vorbestimmte Motorstromwert der Haltestrom für den Motorstrom ist.

Darüber hinaus ist es ebenfalls Aufgabe der vorliegenden Erfindung eine Werkzeugmaschine bereitzustellen, mit der das vorstehend erwähnte Verfahren betrieben werden kann.

Gemäß einer vorteilhaften Ausführungsform der vorliegenden Erfindung kann es möglich sein, dass der Elektromotor ein Universalmotor ist.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: eine schematische Darstellung einer erfindungsgemäßen Werkzeugmaschine;
- Fig. 2: eine grafische Darstellung einer Motorkennlinie bei z.B. 20000 rpm;
- Fig. 3: eine grafische Darstellung einer Motorkennlinie bei einer entsprechenden Reduzierung auf 15% des Drehzahlwerts in Fig. 1;
- Fig. 4: eine grafische Darstellung des Motorstromverlaufs bei einem Haltestromwert; und
- Fig. 5: eine grafische Darstellung des Motorstromverlaufs bei einem oszillierenden Verhalten der Regeleinheit.

### Ausführungsbeispiel:

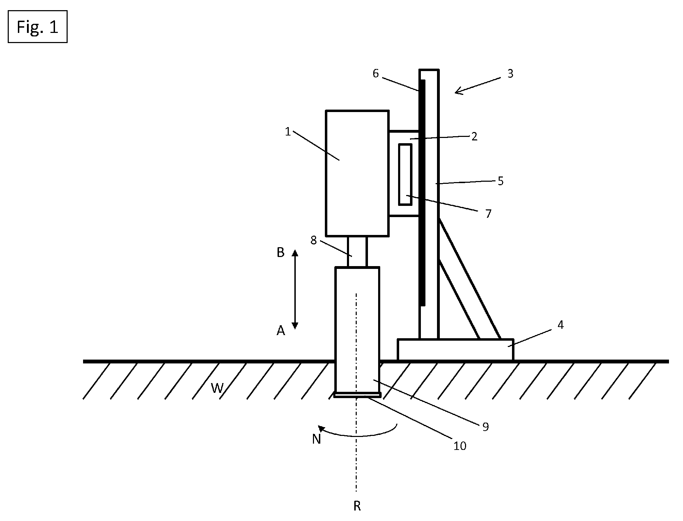

Fig. 1 zeigt eine Werkzeugmaschine 1 gemäß der vorliegenden Erfindung. Bei der Werkzeugmaschine 1 handelt es sich um eine Kernbohrmaschine zum Schneiden von Löchern in harte Werkstoffe W, wie beispielsweise Beton, Zement, Ziegelwerk oder dergleichen.

Die als Kernbohrmaschine 1 ausgestaltete Werkzeugmaschine ist über eine Antriebsvorrichtung 2 mit einem Bohrständer 3 beweglich verbunden. Der Bohrständer 3 enthält im Wesentlichen eine Fußvorrichtung 4 sowie eine Führungsschiene 5. Wie in Fig. 1 gezeigt kann die Fußvorrichtung 4 waagerecht auf einen zu bearbeitenden Untergrund W befestigt werden. Die Befestigung erfolgt mittels Schrauben, welche in den Figuren nicht dargestellt sind. Es ist jedoch auch möglich, dass die Befestigung über eine Verspannung oder über eine Vakuumvorrichtung an der Fußvorrichtung des Bohrständers 3 erfolgt. Die Vakuumvorrichtung erzeugt dabei einen Unterdruck, durch den der Bohrständer am Boden gehalten wird. Die Verspannung oder die Vakuumvorrichtung sind in den Figuren nicht dargestellt.
Alternativ kann die Fußvorrichtung 4 auch an einer vertikalen Wand oder schiefen Ebene befestigt werden, um entsprechend den gesamten Bohrständer 3 an der vertikalen Wand bzw. auf der schiefen Ebene zu montieren bzw. zu halten. Die Führungsschiene 5 erstreckt sich in einem 90°-Winkel zu der Fußvorrichtung 4 (vgl. Fig. 1). Alternativ kann die Führungsschiene 5 auch in einem Winkel größer oder kleiner als 90° mit der Fußvorrichtung 4 verbunden sein.
Des Weiteren enthält die Führungsschiene 5 an einer Seite eine Zahnstangenvorrichtung 6, die sich ungefähr über die gesamte Länge der Führungsschiene 5 erstreckt.

Wie bereits vorstehend erwähnt, ist die Antriebsvorrichtung 2 zwischen der Kernbohrmaschine 1 und dem Bohrständer 3 positioniert. Mit Hilfe der Antriebsvorrichtung 2 kann die Kernbohrmaschine 1 entlang der Führungsschiene 5 des Bohrständers 3 bewegt werden. In Bezug auf das in Fig. 1 dargestellte Ausführungsbeispiel kann die Kernbohrmaschine 1 reversibel in Pfeilrichtung A oder B bewegt werden. Die Antriebsvorrichtung 2 verfügt hierzu über eine erste Befestigungseinrichtung, mit der die Kernbohrmaschine an dem Gehäuse der Antriebsvorrichtung 2 lösbar verbunden werden kann. Die erste Befestigungseinrichtung ist in den Figuren nicht dargestellt.
Darüber hinaus enthält die Antriebsvorrichtung noch eine zweite Befestigungseinrichtung, mit der das Gehäuse der Antriebsvorrichtung 2 mit der Führungsschiene 5 des Bohrständers verbunden werden kann. Die zweite Befestigungseinrichtung ist in den Figuren ebenfalls nicht dargestellt. Die zweite Befestigungseinrichtung weist hierzu eine (nicht gezeigte) Halteeinheit und eine (ebenfalls nicht gezeigte) Zahnradeinheit auf. Mit Hilfe der Halteeinheit hält sich die Antriebsvorrichtung 2 an der Führungsschiene 5 fest. Das entsprechend ausgestaltete Zahnrad greift in die Zahnstangenvorrichtung ein und führt dadurch die Antriebsvorrichtung 2 entlang der Führungsschiene 5. Um die Zahnradeinheit in eine Drehbewegung zu versetzen, besitzt die Antriebsvorrichtung 2 weiterhin einen Antrieb. Bei dem Antrieb kann es sich um einen Elektromotor samt Getriebe- bzw. Übersetzungseinheit handeln. Bei dem Elektromotor kann es sich beispielsweise um einen Universalmotor handeln. Es sind jedoch auch andere geeignete Elektromotoren möglich.
Weder der Antrieb noch die Getriebe- bzw. Übersetzungseinheit sind in den Figuren dargestellt.

Gemäß einer alternativen (und in den Figuren nicht dargestellten) Ausführungsform kann die Antriebsvorrichtung 2 auch anstelle eines Elektromotors als Antrieb lediglich ein Handrad zum manuellen Antreiben der Antriebsvorrichtung aufweisen. Das Handrad ist in den Figuren nicht dargestellt.

Die Antriebsvorrichtung 2 enthält des Weiteren eine Regel- und Steuerungseinrichtung, mit der die Bewegungsparameter, d.h. die Geschwindigkeit, Wegstrecke, Bewegungsstart- und Bewegungsendpunkt sowie andere Parameter, der Antriebsvorrichtung relativ zu dem Bohrständer geregelt bzw. gesteuert werden können. Zur Bedienung durch den Anwender enthält die Antriebsvorrichtung 2 eine Benutzerschnittstelle 7 (sogenanntes MMI = Man-Machine-Interface), mit der die Antriebsvorrichtung 2 bedient werden kann.

Die als Kernbohrmaschine ausgestaltete Werkzeugmaschine 1 enthält im Wesentlichen ein Gehäuse, eine Antriebseinheit, ein Getriebe, eine Steuer- und Regelvorrichtung, eine Antriebswelle und eine Abtriebswelle 8. Die Steuer- und Regelvorrichtung enthält einen Regler zum Regeln und Steuern des Motorstroms. Die Antriebseinheit, das Getriebe, die Steuervorrichtung und die Antriebswelle sind in den Figuren nicht dargestellt. An der Abtriebswelle ist ein Bohrwerkzeug 9 in Gestalt einer Bohrkrone angeschlossen. Die Bohrkrone 9 weist an einem freien Ende eine Schneidekante 10 auf, mit der der zu bearbeitende Werkstoff geschnitten werden kann, um ein Bohrloch zu erzeugen. Die als Elektromotor ausgestaltete Antriebseinheit versetzt die Bohrkrone 9 hierzu in eine Drehbewegung in Richtung N. Sowohl die Bohrkrone 9 als auch die Abtriebswelle drehen sich um die gemeinsame Drehachse R.

Die Steuer- und Regelvorrichtung dient zum Steuern bzw. Regeln der als Elektromotors ausgestalteten Antriebseinheit. Hierbei wird insbesondere die Drehzahl des Elektromotors gesteuert bzw. geregelt. Darüber hinaus kann entsprechend der jeweiligen Situation des Bohrvorgangs ein bestimmter Modus eingestellt werden. Die Steuer- und Regelvorrichtung verfügt dabei über mehrere Modi. Des Weiteren kann über die Steuer- und Regelvorrichtung der Gang gewählt und eingelegt werden.

Zur Durchführung des eigentlichen Bohrvorgangs wird die Kernbohrmaschine 1 mit der daran angeschlossenen Bohrkrone 9 mittels des Bohrständers 3 an dem zu bearbeitenden Werkstoff W positioniert und befestigt.

Mit Hilfe der Steuer- und Regelvorrichtung wird an dem Getriebe der Kernbohrmaschine 1 ein Gang ausgewählt und entsprechend eingelegt. Der zu wählende Gang wird anhand des Durchmessers der verwendeten Bohrkrone 9 bestimmt. Durch den gewählten Gang wird entsprechend die Drehzahl des Elektromotors festgelegt, mit der dieser drehen soll. Das Getriebe und insbesondere der gewählte Gang des Getriebes lassen die Bohrkrone 9 in einer entsprechenden Drehzahl drehen.

Als nächstes wird ein Ein- und Ausschalter an der Kernbohrmaschine 1 betätigt. Der Ein- und Ausschalter ist Bestandteil der Steuer- und Regelvorrichtung und in den Figuren nicht dargestellt.
Nach dem Betätigen des Ein- und Ausschalters beginnt sich die Bohrkrone 9 in Richtung N zu drehen. Die Bohrkrone 9 und insbesondere die Schneidekante 10 der Bohrkrone 9 befinden sich zu Beginn des Bohrvorgangs noch (in Pfeilrichtung B) über dem Werkstoff W. Die Position der Bohrkrone 9 über dem Werkstoff W ist in den Figuren nicht dargestellt.

Zu Beginn des Bohrvorgangs und insbesondere wenn sich die Bohrkrone 9 noch über dem zu bearbeitenden Werkstoff W befindet, wird über eine Eingabe an der Steuer- und Regelvorrichtung ein bestimmter Modus zum Betreiben der Kernbohrmaschine 1 gewählt. Bei diesem bestimmten Modus dreht sich die Bohrkrone 9 bzw. die Abtriebswelle 8 mit einer Leerlaufdrehzahl (n0).

Anschließend wird ein weiterer Modus über eine Eingabe an der Steuer- und Regelvorrichtung gewählt. Bei diesem Modus handelt es sich um einen sogenannten Anbohrmodus. In diesem Anbohrmodus wird die Drehzahl der Bohrkrone 9 bzw. der Abtriebswelle 8 reduziert, sodass diese niedriger ist als die Leerlaufdrehzahl. Die Drehzahl in dem Anbohrmodus ist dabei ungefähr 50% niedriger als die Leerlaufdrehzahl (< 50% von n0).

Nachfolgend wird die Kernbohrmaschine 1 mit der sich drehenden Bohrkrone 9 mittels der Antriebsvorrichtung 2 entlang der Führungsschiene 6 des Bohrständers 3 auf den Werkstoff W zubewegt (Pfeilrichtung A in Fig. 1).

Sobald die Schneidekante 10 der Bohrkrone 9 Kontakt mit der Oberfläche des Werkstoffs W hat, wird die Bohrkrone 9 mit einer relativ geringen Anpresskraft auf den Werkstoff W gedrückt (Pfeilrichtung A), um eine erste Führungsrinne in die Oberfläche des Werkstoffs W zu schneiden. Die Anpresskraft wird durch die Antriebsvorrichtung 2 erzeugt und mittels der Regel- und Steuerungseinrichtung der Antriebsvorrichtung 2 geregelt bzw. gesteuert.
Für gewöhnlich beträgt die Tiefe in Pfeilrichtung A ungefähr zwischen 2 bis 5 mm. Eine relativ niedrige Anpresskraft ist dabei notwendig, da ansonsten durch den hohen Widerstand des harten Werkstoffs W die Drehzahl der Bohrkrone 9 zu stark abfällt bzw. die Bohrkrone 9 auch vollständig zum Stillstand kommen kann. Mit einer zu niedrigen Drehzahl reduziert sich entsprechend auch die Leistung der Bohrkrone 9, d.h. insbesondere die Schneideleistung der Bohrkrone 9 in dem Werkstoff W, wodurch kein genügender Bohrfortschritt mehr erreicht werden kann.

Die als Kernbohrmaschine ausgestaltete Werkzeugmaschine 1 enthält des Weiteren eine Anzahl von Sensoren, durch welche die tatsächliche Drehzahl der Abtriebswelle 8 sowie der Bohrkrone 9 jeder Zeit gemessen werden kann. Die Sensoren sind in den Figuren nicht dargestellt. Die von den Sensoren ermittelten Messwerte werden zur Auswertung an die Steuer- und Regelvorrichtung der Kernbohrmaschine 1 sowie an die Steuer- und Regelvorrichtung der Antriebsvorrichtung 2 geleitet.

Wenn die Anpresskraft der Bohrkrone 9 auf den Werkstoff W einen bestimmten Schwellwert übersteigt, kann mit Hilfe der Sensoren ein vorbestimmter erster Schwellwert für den Motorstrom ermittelt werden. Das Ermitteln des ersten Schwellwerts erfolgt dabei über eine Ableitung der Netzstromspannung. Der vorbestimmte erste Schwellwert weist dabei auf eine aufgrund des zu großen Anpressdrucks resultierende zu starke Drehzahlreduzierung und ein entsprechender Leistungsabfall der Bohrkrone 9 hin. Bei dem vorbestimmten ersten Schwellwert kann es sich um den sogenannten Kipp-Punkt für den Motorstrom (Iₖᵢₚₚ) des Elektromotors handeln.

Eine zu starke Drehzahlreduzierung und ein damit verbundener Leistungsabfall bedeuten in diesem Zusammenhang, dass der Kernbohrvorgang nicht mehr effizient durchgeführt werden kann (d.h. ein sehr langsamer Bohrvorschritt) bzw. sogar ein vollständiger Stillstand der Bohrkrone 9 im Werkstoff W. Die zu starke Drehzahlreduzierung und der entsprechende Leistungsabfall der Bohrkrone 9 werden an die Steuer- und Regelvorrichtung der Kernbohrmaschine 1 sowie an die Steuer- und Regelvorrichtung der Antriebsvorrichtung 2 geleitet. Als Folge dessen wird über die Steuer- und Regelvorrichtung der Kernbohrmaschine 1 ein sogenannter Haltestrom I₀ auf den Elektromotor aufgeprägt. Der Haltestrom I₀ dient dazu, dass bei einer Reduzierung der Anpresskraft der Bohrkrone 9 auf den Werkstoff W und einem damit verbundenen Abfall des Widerstands an dem Elektromotor der Kernbohrmaschine 1 die Drehzahl der Bohrkrone 9 wieder ansteigt. Es muss hierbei nun nicht erst die Kernbohrmaschine 1 vollständig gestoppt (d.h. Drehzahl ist dann gleich Null) und dann die Drehzahlen langsam wieder hochgefahren werden. Gemäß der vorliegenden Erfindung ist damit der Betrieb der Kernbohrmaschine 1 mit weniger und/oder kürzeren Unterbrechungen ermöglicht. In Folge dessen kann der gesamte Kernbohrvorgang wesentlich effizienter gestaltet werden.

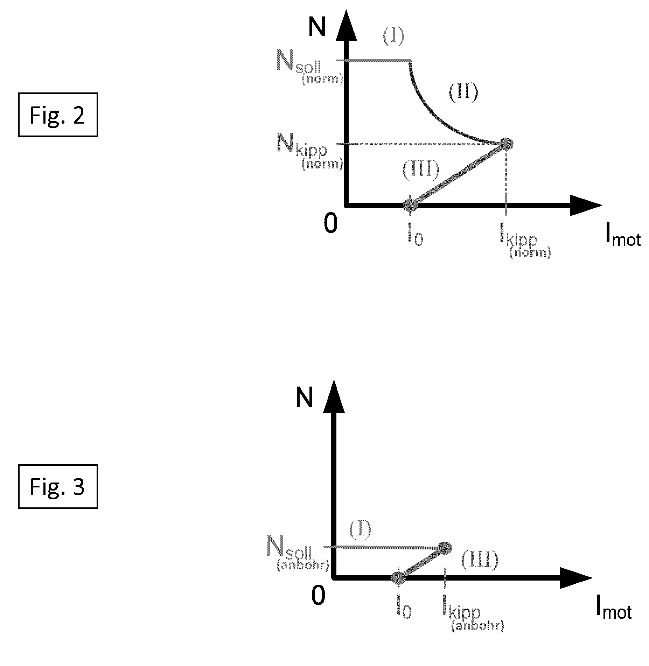

Fig. 2 und 3 zeigen den grafischen Verlauf der Drehzahl N des Elektromotors zum Motorstrom Iₘₒₜ bei der Verwendung einer Kernbohrmaschine 1 mit einer Drehzahl von beispielsweise 20.000 rpm (= Drehzahl pro Minute) während eines Kernbohrvorgangs. Ab einem Kipp-Punkt (Nₖᵢₚₚ, Iₖᵢₚₚ) wird dem Elektromotor der Haltestrom I₀ aufgeprägt.

Der mit I gekennzeichnete Abschnitt stellt die normale Drehzahlregelung dar. Der mit II gekennzeichnete Abschnitt stellt die Drehzahlregelung auf einer natürlichen Kennlinie (d.h. Stellgröße: Power = 100%) dar. Der mit III gekennzeichnete Abschnitt stellt die Stromregelung dar.

Fig. 3 zeigt hingegen den grafischen Verlauf der Drehzahl N des Elektromotors zum Motorstrom Iₘₒₜ bei der Verwendung einer Kernbohrmaschine 1 mit reduzierter Drehzahl in dem Anbohrmodus während der Anbohrphase des Kernbohrvorgangs. Die Reduzierung der Drehzahl beträgt beispielsweise 15% der Leerlaufdrehzahl vor Beginn des Kernbohrvorgangs.

Im Vergleich der grafischen Verläufe in den Fig. 2 und 3 zueinander wird ersichtlich, dass in Fig. 3 im Gegensatz zu Fig. 2 der Kipp-Punkt früher bzw. relativ früh erreicht wird. So liegt beispielsweise der Kipp-Punkt für den Motorstrom bei der Verwendung einer Kernbohrmaschine 1 mit einer Drehzahl von z.B. 20.000 rpm während eines Kernbohrvorgangs bei ca. 19 A. Im Vergleich dazu liegt der Kipp-Punkt für den Motorstrom bei der Verwendung einer Kernbohrmaschine 1 mit reduzierter Drehzahl (15% der Leerlaufdrehzahl) in dem Anbohrmodus während der Anbohrphase des Kernbohrvorgangs lediglich bei 13 A.

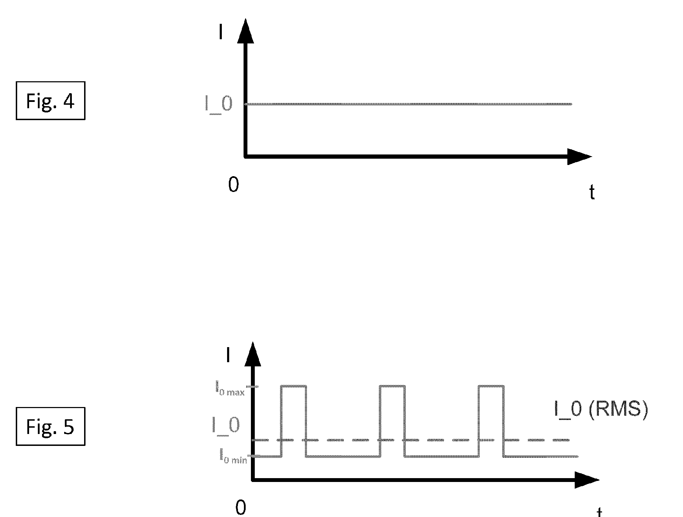

Nach Überschreiten des Kipp-Punktes (vgl. Fig. 3) beträgt der Haltestrom ca. 8,5 A (vgl. Fig. 4). Dies bedeutet jedoch, dass bei einer entsprechend reduzierten Drehzahl nur sehr wenig Leistung zur Verfügung steht, um nach dem Stillstand die Bohrkrone 9 wieder weiterdrehen lassen zu können. Die Drehzahl kann dabei auf null (d.h. vollständiger Stillstand) absinken.

Die Steuer- und Regelvorrichtung der Kernbohrmaschine 1 lässt den Elektromotor pulsieren, indem der Regler zum Regeln und Steuern des Motorstroms in Schwingung (oszillierenden Verhalten) versetzt wird. Der daraus resultierende Stromverlauf ist in der grafischen Darstellung in Fig. 5 gezeigt. Zu beachten ist dabei, dass der RMS-Wert (Effektivwert) des Motorstromes vordefinierte Grenzwerte nicht überschreitet. Die Abgabe der Impulse an den Elektromotor kann dabei willkürlich, gesteuert oder geregelt sein.

Durch das oszillierende Verhalten bzw. Schwingen des Reglers wird bei einer niedrigen Drehzahl die Leistungsabgabe der Bohrkrone 9 erhöht.

## Patentansprüche

1. Verfahren zum Betreiben einer Werkzeugmaschine (1), insbesondere einer Kernbohrmaschine, mit einem Elektromotor zum Antreiben eines Bohrwerkzeugs (9), insbesondere einer Bohrkrone, und mit einer Steuer- und Regelvorrichtung zum Regeln und Steuern der Motorleistung mittels Motorstroms des Elektromotors,
**gekennzeichnet durch** die Verfahrensschritte
- Betreiben der Werkzeugmaschine (1) in einem Anbohrmodus mit einem ersten Drehzahlwert, wobei der erste Drehzahlwert geringer ist als ein vorbestimmter Leerlaufdrehzahlwert des Elektromotors;
- Ermitteln eines vorbestimmten ersten Schwellwerts für den Motorstrom;
- Reduzieren des Motorstroms auf einen vorbestimmten zweiten Schwellwert, wenn der erste Schwellwert für den Motorstrom überschritten wird;
- Betreiben der Werkzeugmaschine (1) mit einem zweiten Drehzahlwert, wobei der zweite Drehzahlwert geringer ist als der erste Drehzahlwert;
- Betreiben des Elektromotors mit einem vorbestimmten Motorstromwert; und
- Betreiben der Steuer- und Regelvorrichtung zum Regeln der Motorleistung mittels Motorstroms in einem oszillierenden Verhalten.

2. Verfahren nach Anspruch 1,
**dadurch gekennzeichnet, dass** der vorbestimmte Schwellwert der Kipp-Punkt für den Motorstrom ist.

3. Verfahren nach Anspruch 1,
**dadurch gekennzeichnet, dass** der vorbestimmte Motorstromwert der Haltestrom für den Motorstrom ist.

4. Werkzeugmaschine (1) betreibbar mit dem Verfahren nach wenigstens einem der Ansprüche 1 bis 3.

5. Werkzeugmaschine (1) nach Anspruch 4,
**dadurch gekennzeichnet, dass** der Elektromotor ein Universalmotor ist.
